# EUROPÄISCHE PATENTSCHRIFT

(11) **EP 1 764 257 B1**
(45) Veröffentlichungstag und Bekanntmachung des Hinweises auf die Patenterteilung: **03.09.2014**
(21) Anmeldenummer: 06014561.2
(22) Anmeldetag: 13.07.2006
(51) Int. Cl.: B60N 2/02, F16H 1/16

(54) **Getriebe für Verstelleinrichtungen, insbesondere in Kraftfahrzeugen**
Gear for adjusting devices, especially in motor vehicles
Transmission pour des dispositifs de réglage, en particulier dans des automobiles

(30) Priorität: 16.09.2005 DE 102005044467
(43) Veröffentlichungstag der Anmeldung: 21.03.2007
(73) Patentinhaber: IMS Gear GmbH, 78166 Donaueschingen (DE)
(72) Erfinder: Hoch, Stefan, 79822 Titisee-Neustadt (DE); Birker, Stéphane, 78166 Donaueschingen (DE); Wöhrle, Michael, 78078 Niedereschach (DE)
(74) Vertreter: Patentanwälte Westphal, Mussgnug & Partner

(56) Entgegenhaltungen:
- EP-A- 0 181 240
- EP-A- 1 253 275
- WO-A-01/40679
- WO-A-2005/015054
- DE-A1- 3 434 093
- DE-A1- 19 861 100
- US-A- 5 349 878

## Beschreibung

Die vorliegenden Erfindung betrifft eine Antriebsschnecke für ein Getriebe, insbesondere für Verstelleinrichtungen in Kraftfahrzeugen.

Antriebsschnecken sind z.B. aus EP1253275A1 und DE3434093A1 bekannt.

Ein Schneckenantrieb für Verstelleinrichtungen in Kraftfahrzeugen ist aus der DE 198 61 100 bekannt. Eine derartige Verstelleinrichtung besteht aus einem Getriebemotor, der vorzugsweise über eine flexible Welle zunächst eine Antriebsschnecke antreibt, die wiederum eine auf einer drehfest gelagerten Gewindespindel angeordnete Spindelmutter antreibt. Dabei werden die direkt oder indirekt mit der Antriebsschnecke oder Spindelmutter verbundenen Teile entlang der Spindel relativ zum Rest des Fahrzeugs verschoben. Derartige Verstelleinrichtungen sind besonders geeignet als Sitzverstelleinrichtungen für Kraftfahrzeuge, als Fensterheber oder als Verstelleinrichtung für Schiebedächer.

Antriebsschnecke und Spindelmutter sind üblicherweise in einem Getriebegehäuse gelagert, das dann an seiner Außenkontur von einer Haltevorrichtung erfasst wird. Die Haltevorrichtung dient beispielsweise zur Verbindung des zu verstellenden Teils des Kraftfahrzeugs mit dem Getriebe der Verstelleinrichtung.

Getriebe nach dem Stand der Technik für Verstelleinrichtungen in Kraftfahrzeugen sind üblicherweise mit Getriebeelementen aus Metall ausgerüstet. So werden beispielsweise Antriebsschnecken aus verschleißfestem Metall aufwändig aus einem Metallstück gefräst, wobei aufgrund der gewünschten Geometrie hohe Anforderungen an die Bearbeitungsmaschine gestellt werden. Dies führt zu entsprechend hohen Stückkosten. Ein weiterer Nachteil beim Einsatz derartiger Getriebeelemente aus Metall ist die Neigung des Metalls zur Geräuschentwicklung. Diese Geräuschentwicklung kann zwar durch entsprechendes Schmieren verhindert werden, jedoch sind derartige Getriebe für Verstelleinrichtungen in Kraftfahrzeugen nach dem Einbau nicht ohne weiteres zugänglich, so dass es bei nachlassender Schmierwirkung zu unerwünschten Geräuschentwicklungen kommen kann.

Ein weiterer Nachteil bei metallischen Antriebsschnecken kann sich dadurch ergeben, dass beim Antrieb über eine flexible Welle zwischen dem Innenvierkant, der die flexible Welle aufnimmt, und der flexiblen Welle ein Spiel auftritt, wodurch der Rundlauf der flexiblen Welle verschlechtert wird. Auch dies führt zu einer Beeinträchtigung der optimalen Funktion der Verstelleinrichtung.

Versuche, die Nachteile der Metallantriebsschnecken durch den Einsatz von Antriebsschnecken aus Kunststoff auszugleichen, waren teilweise erfolgreich. So wurden vom Anmelder der vorliegenden Erfindung in der Vergangenheit bereits Antriebsschnecken aus Hochleistungskunststoffen eingesetzt, wodurch die Geräuschentwicklung reduziert werden konnte. Ein weiterer Vorteil dieser Antriebsschnecken aus Kunststoff gegenüber den Metallschnecken sind die niedrigen Fertigungskosten.

Als geeignete Kunststoffe für die Fertigung von derartigen Antriebsschnecken haben sich Hochleistungskunststoffe, wie z. B. Polyetheretherketon (PEEK), Polyamid (PA), Polyphenylensulfid (PPS) oder auch Polyoxymethylen (POM) erwiesen. Besonders vorteilhaft kann Polyetheretherketon eingesetzt werden, das aufgrund seiner hohen Festigkeit, hohen Steifigkeit, guten Chemikalienbeständigkeit, seines günstigen Gleit- und Abriebverhaltens sowie seiner sonstigen thermischen und chemischen Eigenschaften als hervorragenden Werkstoff für Funktionsteile im Kraftfahrzeugbau eingesetzt werden.

PEEK wird bei einer Werkzeugtemperatur (Temperatur der Spritzform) von ca. 185°C eingesetzt. Die Einspritztemperatur des Werkstoffes beträgt ca. 380°C. Nachteilig ist bei diesen Bedingungen die hohe Haftung des Werkstoffs am Werkzeug. So werden bei der Fertigung von Kunststoffschnecken Stifte als Hilfen für das Herausdrehen des Werkstücks aus dem Werkzeug eingesetzt, um nach der Formgebung ein schnelles Herausnehmen der Antriebsschnecke aus der noch warmen Form zu ermöglichen. Dabei greifen diese Stifte in sogenannte Entformungstaschen ein, die in Form von Vertiefungen im Werkstück angeordnet sind. Auf diese Weise können auch bei größeren PEEK-Kunststoffschnecken die Taktzeiten soweit gesenkt werden, dass eine kostengünstige Fertigung der Kunststoffschnecken ermöglicht wird. Bei dieser Vorgehensweise hat sich jedoch die hohe Elastizität des Werkstoffes bis zu seiner endgültigen Plastifizierung als Nachteil herausgestellt. So kann es beim Eingriff der Hilfsstifte in die Entformungstaschen und dem anschließenden Herausdrehen aus der Form zur Deformierung des Werkstückes kommen. Besonders kritisch für solche Verformungen ist die Lauffläche an der Stirnseite der Antriebsschnecke. Deformationen an der Lauffläche der Antriebsschnecke führen zu Vibrationen beim Betrieb des Getriebes und zu einer unbefriedigenden Funktion der Verstelleinrichtung.

Aufgabe der Erfindung ist es somit, eine Antriebsschnecke für ein Getriebe zur Verfügung zu stellen, das die oben geschilderten Nachteile des Standes der Technik nicht aufweist.

Gelöst wird diese Aufgabe durch eine Antriebsschnecke für ein Getriebe mit den Merkmalen des Anspruchs 1.

Vorteilhafte Ausführungen und Weiterentwicklungen sind Gegenstand der Unteransprüche.

Die Erfindung beruht darauf, die Nachteile des Standes der Technik durch Einsatz einer Antriebsschnecke aus Kunststoff zu vermeiden, wobei bestimmte geometrische Voraussetzungen bei der Antriebsschnecke erfüllt werden.

Erfindungsgemäß muss die Antriebsschnecke eine senkrecht zur Schneckenachse umlaufende, ringförmige, ebene Lauffläche aufweisen, um einen vibrationsfreien Betrieb des Getriebes zu ermöglichen. Eine absolut ebene Lauffläche wird erhalten, wenn man das Werkstück in der Spritzform vor dem Herausnehmen lange genug abkühlen lässt. Da jedoch nicht nur die technische Funktion der Antriebsschnecke entscheidend ist, sondern auch die Fertigungskosten eine große Rolle spielen, muss ein genügend schnelles Herausholen der Antriebsschnecke aus der Spritzform (dem Werkzeug) gewährleistet sein. Dies geschieht mit Hilfe einer Anzahl von Entformungstaschen, die in Form von Vertiefungen axial in die Antriebsschnecke eingreifen und dabei bevorzugt symmetrisch über den Umfang der Antriebsschnecke verteilt sind, wobei die Anzahl der Entformungstaschen vorteilhaft zwischen 3 und 15, besonders vorteilhaft zwischen 6 und 10, beträgt. Beim Herausdrehen der Antriebsschnecke aus der Form greifen Hilfsstifte in die Entformungstaschen ein. Die Entformungstaschen sind erfindungsgemäss zwischen Lauffläche und Schneckenachse in einer zur Ebene der Lauffläche vertieften Ebene angeordnet. Die Vertiefung der Ebene der Entformungstaschen ist eine erste Maßnahme zur Vermeidung von Deformierungen im Bereich der Lauffläche, da auf diese weise die Kraft beim Herausdrehen nicht direkt auf die Lauffläche übertragen wird.

Jedoch insbesondere bei größeren Kunststoffschnecken reicht diese Maßnahme allein nicht aus, um eine Verformung der Lauffläche beim Herausdrehen des thermoelastischen Werkstückes aus der Werkzeugform sicher zu vermeiden. Es kommt nämlich durch ungünstige Kraftübertragung überwiegend dort, wo die Stege, die die einzelnen Entformungstaschen voneinander trennen, auf den Bereich der Lauffläche treffen, zu Verformungen auf der Lauffläche.

Solche Deformationen der Lauffläche können erfindungsgemäß durch die Ausbildung einer Fase im Übergangsbereich von der Ebene der ringförmigen Lauffläche zur Ebene der Entformungstaschen sicher vermieden werden. Mit Hilfe dieser umlaufenden Fase wird die Kraft, die beim Herausdrehen der Antriebsschnecke aus dem Werkzeug, auftritt, nicht mehr bis zur Lauffläche übertragen, sondern eventuelle Verformungen treten nun innerhalb der Fase auf, wo sie nicht weiter stören.

Der Winkel zwischen umlaufender Fase und ringförmiger Lauffläche beträgt zwischen 20 und 60°. Bei einer besonders vorteilhaften Ausführungsform beträgt der Winkel etwa 30 bis etwa 45°.

Um einen ausreichenden Schutz der umlaufenden Lauffläche zu gewährleisten, beträgt die Vertiefung zwischen der Ebene der Entformungstaschen und der Ebene der ringförmigen Lauffläche, die von der umlaufenden Fase überbrückt wird, zwischen 0,1 bis 2mm. Dabei hat es sich als besonders vorteilhaft herausgestellt, wenn der Abstand zwischen den beiden Ebenen bei etwa 0,5mm liegt.

Die erfindungsgemäße Antriebsschnecke weist in axialer Richtung einen Innenvierkant zur Aufnahme einer flexiblen Welle auf. Dabei weisen bei einer vorteilhaften Ausführungsform die Flächen des Innenvierkants axial verlaufende Schlitze auf, die zusätzlich zu den Entformungstaschen als Eingriffsmöglichkeiten für ein entsprechendes Gegenstück zur besseren Entformung des Werkstückes aus dem Werkzeug herangezogen werden. Bei einer besonders vorteilhaften Ausgestaltung ist mindestens einer der Schlitze konisch ausgelegt, so dass beim Ausstoßen der Schnecke eine Vakuumbildung vermieden wird.

Zusätzlich ergeben sich besondere Vorteile, wenn insgesamt acht Schlitze asymmetrisch auf den Innenflächen des Vierkants angeordnet sind und dabei vorzugsweise jede Innenfläche jeweils zwei parallel verlaufende zentrierte Schlitze aufweist. Dadurch kann bei entsprechendem Abstand der parallel verlaufenden Schlitze auf den vier Innenflächen des Innenvierkants jeweils eine Quetschrippe ausgebildet werden, die eine spielfreie Befestigung der flexiblen Antriebswelle ermöglicht.

Beim Einsatz des erfindungsgemäßen Getriebes für eine Verstelleinrichtung in Kraftfahrzeugen treibt eine über eine flexible Welle von einem Antriebsmotor angetriebene Antriebsschnecke eine Spindelmutter an, die auf einer Spindel angeordnet ist. Je nachdem, ob die Spindel drehfest oder drehend angeordnet ist, werden die mit dem Getriebe direkt oder indirekt verbundenen Teile entlang der Spindel bzw, bei einer drehenden Spindel die an der Spindel angeordneten Teile relativ zum Fahrzeug verschoben. Besonders geeignet ist ein Getriebe der oben geschilderten Art für eine Sitzverstelleinrichtung für Kraftfahrzeuge. Im Folgenden wird das erfindungsgemäße Getriebe anhand von beispielhaften Figuren ausführlich erläutert. Dabei zeigen:
- Figur 1: eine perspektivische Darstellung eines Getriebes mit Gewindespindel einschließlich Halterung,
- Figur 2: eine Explosivdarstellung des Getriebes mit Gewindespindel und Halterungen,
- Figur 3: eine perspektivische Darstellung der Antriebsschnecke,
- Figur 4: eine Draufsicht der Antriebsschnecke,
- Figur 5: einen Längsschnitt der Antriebsschnecke,
- Figur 5a: einen Ausschnitt aus dem Längsschnitt (Figur 5) der Antriebsschnecke.

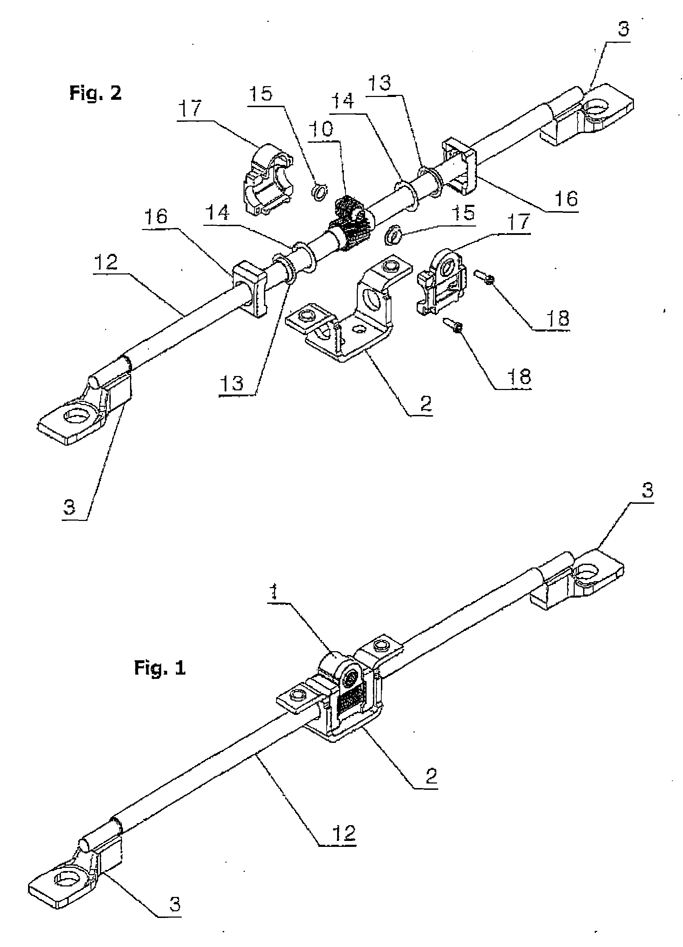

In den Figuren 1 bis 5a wird die Erfindung beispielhaft anhand eines Teilstückes einer Verstelleinrichtung für Sitze in Kraftfahrzeugen ausführlich erläutert.

In Figur 1 ist das Getriebe 1 mitsamt Gewindespindel 12 sowie der Halterung 2 für das Getriebe 1 als auch den Halterungen 3 für die Gewindespindel 12 perspektivisch dargestellt. Die Gewindespindel 12 ist drehfest auf den Halterungen 3 befestigt. Das Getriebe 1 kann, angetrieben über eine flexible Welle (die in der Abbildung nicht zu sehen ist), mitsamt der Halterung 2 entlang der Spindel 12 bewegt werden. Die Spindel 12 selber ist fix über die Halterungen 3 mit der Fahrzeugkarosserie oder anderen Fahrzeugteilen verbunden, so dass die über die Halterung 2 mit dem Getriebe 1 verbundenen Teile in Relation zum Rest des Fahrzeuges zusammen mit dem Getriebe 1 entlang der Spindel verschoben werden.

Die Figur 2 zeigt eine Explosivdarstellung des in der Figur 1 dargestellten Getriebes 1 mitsamt Gewindespindel 12 und Halterungen 2, 3. Als Funktionselemente des Getriebes 1 sind dabei die Antriebsschnecke 10, die Spindelmutter 11, die Lagerbuchsen 13, , 15, die Anlaufscheibe 14, das Spindelgehäuse 17 mitsamt Befestigungsschrauben 18 sowie die Entkopplungselemente 16 zu erkennen. Die auf der Gewindespindel 12 gelagerte Spindelmutter 11 wird von der Antriebsschnecke 10 angetrieben und entlang der Spindel 12 bewegt. Zwischen den Funktionselementen des Getriebes 1 und den Gehäuseteilen 17 bzw. Entkopplungselementen 16 sind jeweils Lagerbuchsen 13, 15 sowie Anlaufscheiben 14 angeordnet, um den Gleichlauf des Getriebes 1 zu gewährleisten. Die Lagerbuchse 15 sitzt dabei direkt auf der Lauffläche 27 der Antriebsschnecke 10. Zusammengehalten wird das Getriebe durch die Befestigungsschrauben 18, über die die beiden Gehäuseteile 17 miteinander verbunden werden. Das Getriebe 1 wird mit Hilfe der Halterung 2 auf der Spindel befestigt.

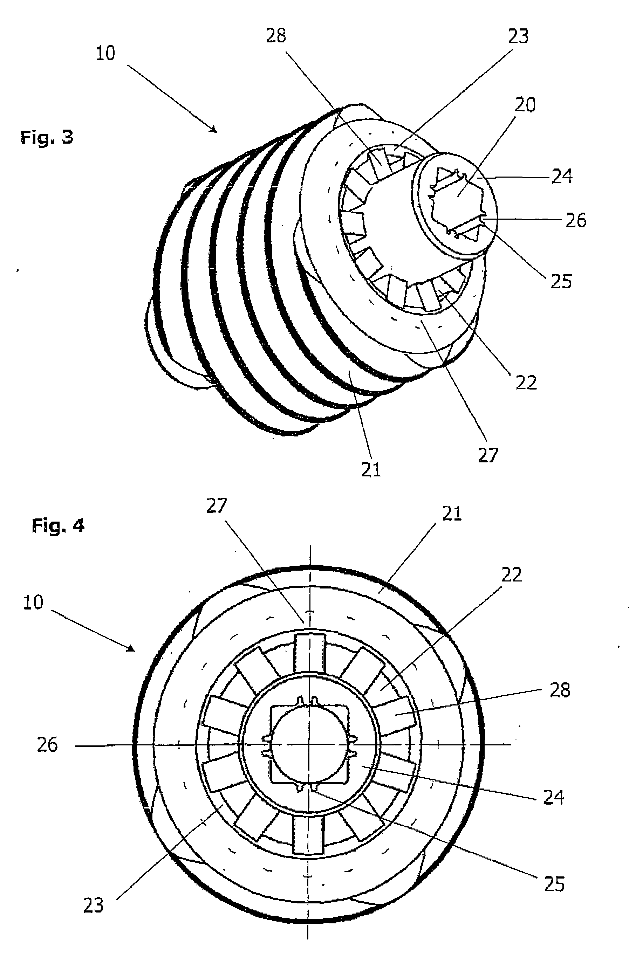

Die Figur 3 zeigt eine perspektivische Darstellung der Antriebsschnecke 10. Die senkrecht zur Schneckenachse umlaufende ringförmige ebene Lauffläche 27 ist gestrichelt gekennzeichnet. Zwischen Lauffläche 27 und Schneckenachse sind Entformungstaschen 22 angeordnet, die axial in die Antriebsschnecke 10 eingreifen. Dabei sind die Entformungstaschen 22 in einer zur Ebene der Lauffläche 27 vertieften Ebene 29 angeordnet und voneinander durch Stege 28 getrennt. Der Übergangsbereich von der Ebene der Lauffläche 27 zur Ebene 29 der Entformungstaschen 22 mit den Stegen 28 wird von einer umlaufenden Fase 23 gebildet, die dabei einen Winkel zwischen 20 und 60° zur Lauffläche 27 ausbildet. Die Vertiefung von der Ebene der Lauffläche 27 zur Ebene 29 der Entformungstaschen 22 beträgt zwischen 0,1 und 2mm.

In axialer Richtung weist die Antriebsschnecke 10 einen Innenvierkant 24 auf, der axial aus der Antriebsschnecke 10 herausragt und geeignet ist, beispielsweise eine flexible Antriebswelle aufzunehmen. Die Innenflächen 20 des Innenvierkants 24 weisen im vorliegenden Fall jeweils zwei parallele, axial verlaufende Schlitze 25 auf, die so angeordnet sind, dass sie jeweils gleichzeitig in der Mitte einer Innenfläche 20 eine Quetschrippe 26 ausbilden, mit deren Hilfe eine spielfreie Befestigung beispielsweise einer flexiblen Welle möglich ist. Die axial verlaufenden Schlitze 25 selber können zusätzlich zu den Entformungstaschen 22 als Eingriffsmöglichkeit für entsprechend geformte Gegenstücke beim Herausdrehen der Antriebsschnecke 10 aus dem Werkzeug herangezogen werden. Bei einer besonders bevorzugten Ausführungsform sind die Schlitze 25 konisch ausgebildet, wodurch die Ausbildung eines Vakuums beim Herausdrehen des Werkstücks aus der Form vermieden werden kann.

Bei der Draufsicht in axialer Richtung auf die Antriebsschnecke in Figur 4 ist die zwischen der Ebene 29 der Entformungstaschen 22 und der Ebene der Lauffläche 27 ausgebildete Fase 23 deutlich zu erkennen.

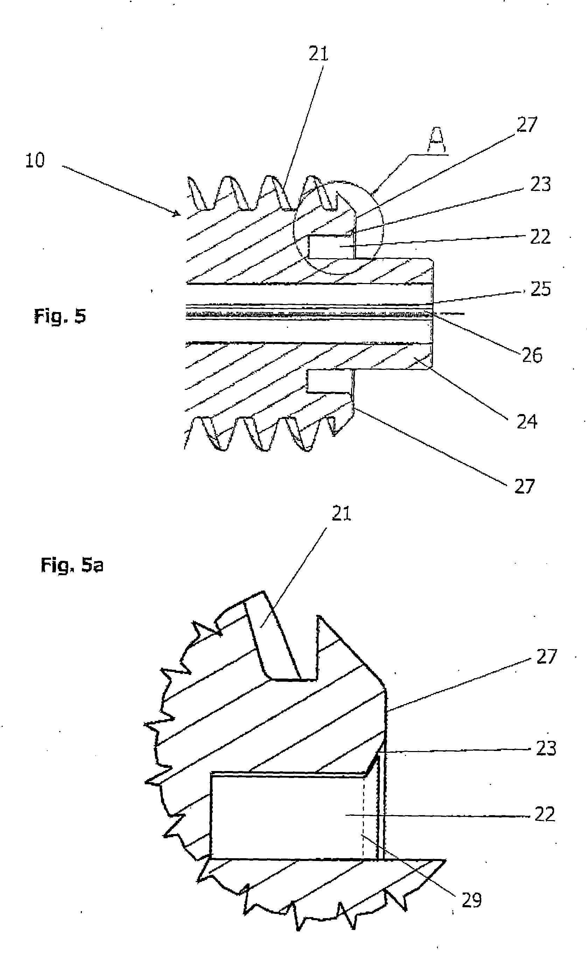

In der Figur 5a, die einen Ausschnitt aus dem Längsschnitt der Antriebsschnecke (Figur 5) bildet, wird die Vertiefung der Ebene 29 der Entformungstaschen 22 gegenüber der Ebene der Lauffläche 27 deutlich. Die Ausbildung der Fase 23 zwischen den beiden Ebenen ist dabei ebenfalls zu erkennen.

Mit Hilfe der Figuren 1 bis 5a wird die Erfindung lediglich beispielhaft für eine Verstelleinrichtung für Sitze in Kraftfahrzeugen erläutert. Darin ist jedoch keine Einschränkung des Erfindungsbereichs zu sehen, der allein durch die nachfolgend formulierten Ansprüche definiert ist.

### Bezugszeichenliste

- 1: Getriebe
- 2: Halterung
- 3: Halterung
- 10: Antriebsschnecke
- 11: Spindelmutter
- 12: Spindel
- 13: Lagerbuchse
- 14: Anlaufscheibe
- 15: Lagerbuchse
- 16: Entkopplungselement
- 17: Gehäuse
- 18: Befestigungsschraube
- 20: Vierkantinnenfläche
- 21: Schneckenverzahnung
- 22: Entformungstasche
- 23: Fase
- 24: Innenvierkant
- 25: Schlitz
- 26: Quetschrippe
- 27: Lauffläche
- 28: Steg
- 29: Ebene der Entformungstaschen

## Patentansprüche

1. Antriebsschnecke aus Kunststoff für ein Getriebe (1), insbesondere für Verstelleinrichtungen in Kraftfahrzeugen, wobei die Antriebsschnecke (10) eine senkrecht zur Schneckenachse umlaufende, ringförmige, ebene Lauffläche (27) aufweist,
**dadurch gekennzeichnet, dass** eine Vielzahl von Entformungstaschen (22) in Form von Vertiefungen, die zwischen Lauffläche (27) und Schneckenachse axial in die Antriebsschnecke (10) eingreifen und von einer zur Ebene der Lauffläche (27) vertieften Ebene (29) in das Innere der Antriebsschnecke (10) hineinragen, vorgesehen sind, dass die Entformungstaschen voneinander durch Stege (28) getrennt sind, und dass im Übergangsbereich von der Ebene (29) der Entformungstaschen (22) zur Ebene der ringförmigen Lauffläche (27) eine umlaufende Fase (23) ausgebildet ist.

2. Antriebsschnecke (10) nach Anspruch 1,
**dadurch gekennzeichnet, dass** die Antriebsschnecke (10) aus einem thermostabilen Hochleistungskunststoff, ausgewählt aus der Gruppe, bestehend aus Polyetheretherketon (PEEK), Polyamid (PA), Polyphenylensulfid (PPS) und Polyoxymethylen (POM), gefertigt ist.

3. Antriebsschnecke (10) nach Anspruch 2,
**dadurch gekennzeichnet, dass** die Antriebsschnecke (10) aus PEEK gefertigt ist.

4. Antriebsschnecke (10) nach einem der Ansprüche 1 bis 3,
**dadurch gekennzeichnet, dass** die Anzahl der Entformungstaschen (22) 3 bis 15, bevorzugt 6 bis 10, beträgt.

5. Antriebsschnecke (10) nach einem der Ansprüche 1 bis 4,
**dadurch gekennzeichnet, dass** der Winkel der umlaufenden Fase (23) zur ringförmigen Lauffläche zwischen 20° und 60° beträgt.

6. Antriebsschnecke (10) nach Anspruch 5,
**dadurch gekennzeichnet, dass** der Winkel der umlaufenden Fase (23) etwa 30° bis etwa 45° beträgt.

7. Antriebsschnecke (10) nach einem der Ansprüche 1 bis 6,
**dadurch gekennzeichnet, dass** die Vertiefung zwischen der Ebene (29) der Entformungstaschen (22) und der Ebene der ringförmigen Lauffläche (27) 0,1 bis 2 mm, bevorzugt 0.5 bis 1 mm, beträgt.

8. Antriebsschnecke (10) nach einem der Ansprüche 1 bis 7,
**dadurch gekennzeichnet, dass** die Antriebsschnecke (10) in axialer Richtung einen Innenvierkant (24) zur Aufnahme einer flexiblen Welle aufweist.

9. Antriebsschnecke (10) nach Anspruch 8,
**dadurch gekennzeichnet, dass** die Flächen (20) des Innenvierkants (24) axial verlaufende Schlitze (25) aufweisen.

10. Antriebsschnecke (10) nach Anspruch 8 oder 9,
**dadurch gekennzeichnet, dass** mindestens einer der Schlitze (25) konisch ausgebildet ist.

11. Antriebsschnecke (10) nach einem der Ansprüche 8 bis 10,
**dadurch gekennzeichnet, dass** insgesamt 8 Schlitze (25) asymmetrisch auf den Innenflächen (20) des Vierkants (24) angeordnet sind, wobei vorzugsweise jede Innenfläche (20) jeweils zwei parallel verlaufende, zentrierte Schlitze (25) aufweist.

12. Antriebsschnecke (10) nach Anspruch 11,
**dadurch gekennzeichnet, dass** zwischen den zwei parallel verlaufenden Schlitzen (25) auf den Flächen (20) des Innenvierkants (24) jeweils eine Quetschrippe (26) zur spielfreien Befestigung einer flexiblen Welle ausgebildet ist.

13. Verwendung der Antriebsschnecke (10) nach einem der Ansprüche 1 bis 12 für eine Verstelleinrichtung in Kraftfahrzeugen,
**dadurch gekennzeichnet, dass** die über eine flexible Welle angetriebene Antriebsschnecke (10) eine Spindelmutter (11), die auf einer drehfest gelagerten Spindel (12) angeordnet ist, antreibt, wobei die mit dem aus Antriebsschnecke (10) und Spindelmutter (11) bestehenden Getriebe (1) verbundenen Fahrzeugteile in Relation zum Rest des Fahrzeugs verschoben werden.

14. Verwendung der Antriebsschnecke (10) nach einem der Ansprüche 1 bis 12 für eine Verstelleinrichtung in Kraftfahrzeugen,
**dadurch gekennzeichnet, dass** eine über eine flexible Welle angetriebene Antriebsschnecke (10) eine Spindelmutter (11), die auf einer sich drehenden Spindel (12) angeordnet ist, antreibt, wobei die mit der Spindel (12) verbundenen Fahrzeugteile in Relation zum Rest des Fahrzeugs verschoben werden.

## Claims

1. Worm drive of plastic for a gearbox (1), in particular for adjustment devices in motor vehicles, wherein the worm drive (10) has an annular, flat contact surface (27) encircling perpendicularly to the worm axis,
**characterized in that** a plurality of mould removal pockets (22) are provided in the form of recesses which engage between the contact surface (27) and worm axis axially in the worm drive (10) and protrude from a plane (29) recessed with respect to the plane of the contact surface (27) into the inside of the worm drive (10), **in that** the mould removal pockets are separated from one another by bars (28), and **in that** an encircling bevel (23) is formed in the transition region from the plane (29) of the mould removal pockets (22) to the plane of the annular contact surface (27).

2. Worm drive (10) according to claim 1,
**characterized in that** the worm drive (10) is manufactured from a heat-stable high-performance plastic chosen from the group consisting of polyetheretherketone (PEEK), polyamide (PA), polyphenylene sulphide (PPS) and polyoxymethylene (POM).

3. Worm drive (10) according to claim 2,
**characterized in that** the worm drive (10) is manufactured from PEEK.

4. Worm drive (10) according to one of claims 1 to 3,
**characterized in that** the number of mould removal pockets (22) is 3 to 15, preferably 6 to 10.

5. Worm drive (10) according to one of claims 1 to 4,
**characterized in that** the angle of the encircling bevel (23) to the annular contact surface is between 20° and 60°.

6. Worm drive (10) according to claim 5,
**characterized in that** the angle of the encircling bevel (23) is about 30° to about 45°.

7. Worm drive (10) according to one of claims 1 to 6,
**characterized in that** the recessing between the plane (29) of the mould removal pockets (22) and the plane of the annular contact surface (27) is 0.1 to 2 mm, preferably 0.5 to 1 mm.

8. Worm drive (10) according to one of claims 1 to 7,
**characterized in that** the worm drive (10) has a square socket (24) in the axial direction for accommodating a flexible shaft.

9. Worm drive (10) according to claim 8,
**characterized in that** the surfaces (20) of the square socket (24) have axially running slots (25).

10. Worm drive (10) according to claim 8 or 9,
**characterized in that** at least one of the slots (25) is conical in construction.

11. Worm drive (10) according to one of claims 8 to 10,
**characterized in that** in total 8 slots (25) are arranged asymmetrically on the inner surfaces (20) of the square (24), preferably each inner surface (20) in each case having two parallel-running, centred slots (25).

12. Worm drive (10) according to claim 11,
**characterized in that** between the two parallel-running slots (25) on the surfaces (20) of the square socket (24) a squeeze rib (26) is in each case formed for fixing of a flexible shaft without play.

13. Use of the worm drive (10) according to one of claims 1 to 12 for an adjustment device in motor vehicles,
**characterized in that** the worm drive (10) driven via a flexible shaft drives a spindle nut (11) arranged on a non-rotatable mounted spindle (12), the vehicle parts connected to the gearbox (1) comprising worm drive (10) and spindle nut (11) being moved in relation to the remainder of the vehicle.

14. Use of the worm drive (10) according to one of claims 1 to 12 for an adjustment device in motor vehicles,
**characterized in that** a worm drive (10) driven via a flexible shaft drives a spindle nut (11) arranged on a rotating spindle (12), the vehicle parts connected to the spindle (12) being moved in relation to the remainder of the vehicle.

## Revendications

1. Vis d'entraînement en matière plastique pour une transmission (1) notamment pour des installations de réglage équipant des véhicules automobiles, la vis d'entraînement (10) ayant une surface de circulation (27), annulaire, périphérique, plane, perpendiculaire à l'axe de la vis,
vis **caractérisée par**
plusieurs poches de démoulage (22) sous la forme de cavités pénétrant axialement dans la vis d'entraînement (10) entre la surface de circulation (27) et l'axe de la vis et pénétrant dans un plan (29) en retrait par rapport au plan de la surface de circulation (27) à l'intérieur de la vis d'entraînement (10),
- les poches de démoulage étant séparées les unes des autres par des voiles (28), et
- dans la région de transition entre le plan (29) des poches de démoulage (22) et le plan de la surface annulaire plane de circulation (27) il y a un congé périphérique (23).

2. Vis d'entraînement (10) selon la revendication 1,
**caractérisée en ce qu'**
elle est réalisée en une matière plastique très résistante, thermostable, choisie dans le groupe comprenant : polyéther-éther-cétone (PEEK), polyamide (PA), sulfure de polyphényl (PPS) et poly-oxy-méthylène (POM).

3. Vis d'entraînement (10) selon la revendication 2,
**caractérisée en ce qu'**
elle est réalisée en PEEK.

4. Vis d'entraînement (10) selon l'une des revendications 1 à 3,
**caractérisée en ce que**
le nombre de poches de démoulage (22) est compris entre 3 et 15 et de préférence entre 6 et 10.

5. Vis d'entraînement (10) selon l'une des revendications 1 à 4,
**caractérisée en ce que**
l'angle du congé périphérique (23) par rapport à la surface annulaire de circulation est compris entre 20° et 60°.

6. Vis d'entraînement (10) selon la revendication 5,
**caractérisée en ce que**
l'angle du congé périphérique (23) est compris entre environ 30° jusqu'à environ 45°.

7. Vis d'entraînement (10) selon l'une des revendications 1 à 6,
**caractérisée en ce que**
la cavité entre le plan (29) des poches de démoulage (22) et le plan de la surface annulaire de circulation (27) est compris entre 0,1 et 2 mm et de préférence entre 0,5 et 1 mm.

8. Vis d'entraînement (10) selon l'une des revendications 1 à 7,
**caractérisée en ce qu'**
elle a un logement à quatre pans (24) dans la direction axiale pour recevoir un arbre souple.

9. Vis d'entraînement (10) selon la revendication 8,
**caractérisée en ce que**
les surfaces (20) du logement à quatre pans (24) ont des rainures (25) dirigées axialement.

10. Vis d'entraînement (10) selon l'une des revendications 8 ou 9,
**caractérisée en ce qu'**
au moins l'une des rainures (25) a une forme conique.

11. Vis d'entraînement (10) selon l'une des revendications 8 à 10,
**caractérisée en ce que**
les surfaces intérieures (20) du logement à quatre pans (24) ont en tout huit rainures (25) asymétriques, et de préférence chaque surface intérieure (20) comporte deux rainures (25) parallèles, centrées.

12. Vis d'entraînement (10) selon la revendication 11,
**caractérisée en ce que**
les surfaces (20) du logement à quatre pans (24) ont chaque fois entre deux rainures parallèles (25), une nervure d'écrasement (26) pour fixer sans jeu, un arbre flexible.

13. Application de la vis d'entraînement (10) selon l'une des revendications 1 à 12 à une installation de réglage de véhicules automobiles **caractérisée en ce que**
la vis d'entraînement (10) actionnée par un arbre souple commande un écrou (11) monté solidairement en rotation sur une broche (12), et
les pièces du véhicule reliées à la transmission (1) formée par la vis d'entraînement (10) et l'écrou à vis (11) sont déplacées par rapport aux autres parties du véhicule.

14. Application de la vis d'entraînement (10) selon l'une des revendications 1 à 12 à une installation de réglage de véhicule automobile,
**caractérisée par**
une vis d'entraînement (10) actionnée par un arbre flexible qui commande un écrou à vis (11) porté par une broche (12) en rotation,
- les pièces du véhicule reliées à la broche (12) étant coulissées par rapport aux autres composants du véhicule.
